# EUROPÄISCHE PATENTSCHRIFT

(11) **EP 0 824 849 B1**
(45) Veröffentlichungstag und Bekanntmachung des Hinweises auf die Patenterteilung: **23.07.2003**
(21) Anmeldenummer: 97915276.6
(22) Anmeldetag: 06.02.1997
(51) Int. Cl.: H05B 41/38, H05B 41/292

(54) **ANORDNUNG ZUM ERKENNEN DER ZÜNDUNG EINER HOCHDRUCK-GASENTLADUNGSLAMPE**
ARRANGEMENT FOR DETECTING THE IGNITION OF A HIGH-PRESSURE GAS DISCHARGE LAMP
DISPOSITIF POUR DETECTER L'ALLUMAGE D'UNE LAMPE LUMINESCENTE A GAZ A HAUTE PRESSION

(30) Priorität: 06.03.1996 DE 19608649
(43) Veröffentlichungstag der Anmeldung: 25.02.1998
(73) Patentinhaber: Automotive Lighting Reutlingen GmbH, 72762 Reutlingen (DE)
(72) Erfinder: BORHO, Lothar, D-77731 Willstätt (DE); ECKERT, Klaus, D-77770 Durbach (DE); KERN, Robert, D-77887 Sasbachwalden (DE)
(74) Vertreter: Dreiss, Fuhlendorf, Steimle & Becker
(86) Internationale Anmeldenummer: DE9700220
(87) Internationale Veröffentlichungsnummer: WO97033455

(56) Entgegenhaltungen:
- EP-A- 0 459 126
- EP-A- 0 477 621
- EP-A- 0 536 535
- WO-A-92/22182
- DE-A- 4 136 486

## Beschreibung

### Stand der Technik

Die Erfindung geht aus von einer Anordnung zum Erkennen der Zündung einer Hochdruck-Gasentladungslampe, insbesondere zur Verwendung in einem Kraftfahrzeugscheinwerfer, der im Oberbegriff des Anspruchs 1 definierten Gattung.

Aus der DE 41 36 486 A1 ist ein Vorschaltgerät zum Starten und Betreiben von Wechselstrom-Hochdruck-Gasentladungslampen bekannt, welches aus einer Gleichspannungsquelle, z.B. der Batterie eines Kraftfahrzeuges gespeist wird. Dabei wird mittels eines DC/DC Wandlers zunächst aus der Gleichspannung der Gleichspännungsquelle eine stabilisierte und/oder leistungsgeregelte Gleichspannung erzeugt, die einen höheren Spannungswert hat. Dann wird aus dieser Spannung mit Hilfe einer gesteuerten Vollbrückenschaltung der für den Betrieb erforderliche Wechselstrom erzeugt. Die Vollbrückenschaltung kann sowohl im Gleichstrom- als auch im Wechselstrombetrieb betrieben werden. Die Steuerung der Vollbrückenschaltung erfolgt von einer Steuerschaltung und für die Zündung der Hochdruck-Gasentladungslampe ist eine Zündvorrichtung vorgesehen.

Bei diesem bekannten Vorschaltgerät wird die Brückenschaltung bei Inbetriebnahme im Gleichstrombetrieb betrieben. Über eine separate Statusbestimmeinrichtung wird ein Signal erzeugt, wenn die Hochdruck-Gasentladungslampe erfolgreich gezündet wurde. Dieses Signal wird über eine Verzögerungsschaltung der Steuerschaltung für die Vollbrückenschaltung zugeführt und sorgt dafür, daß erst nach der gegebenen Verzögerungszeit die Vollbrückenschaltung von Gleichstrombetrieb in den Wechselstrombetrieb umgeschaltet wird. Die nach dem Zünden verzögerte Umschaltung der Versorgung der Hochdruck-Gasentladungslampe mit Brennenergie kann insbesondere bei heißer oder auch nur warmer Hochdruck-Gasentladungslampe zu Überbelastung führen.

Bei bereits auf dem Markt erhältlichen Hochdruck-Gasentladungslampen, insbesondere für den Einsatz in Kraftfahrzeugscheinwerfern, ist es bekannt, die Zündung der Hochdruck-Gasentladungslampe über die Messung von deren Strom und Spannung zu erkennen. Dabei werden Strom und Spannung im sogenannten Polling-Verfahren z.B. von einem Kontroller zyklisch abgefragt. Durch diese Abtastung in bestimmten Zeitabständen entstehen Totzeiten, die zu Verzögerungen führen. Diese können je nach Situation zu unangenehmen Folgen führen.

### Vorteile der Erfindung

Die erfihdungsgemäße Anordnung zum Erkennen der Zündung einer Hochdruck-Gasentladungslampe mit den kennzeichnenden Merkmalen des Anspruchs 1 hat demgegenüber den Vorteil der wesentlich schnelleren, wenn nicht gar der im wesentlichen unverzüglichen oder im wesentlichen unverzögerten Erkennung der Zündung der Hochdruck-Gasentladungslampe. Für das Erkennen der Zündung ist keine aufwendige Schaltung erforderlich. Dies bringt neben dem Zuwachs an Aktualität auch vorteilhafte Kosteneinsparungen.

Gemäß der Erfindung wird dies prinzipiell dadurch erreicht, dass die Steuerschaltung derart geschaltet ist, dass sie über das Verhalten oder den Status der beim Zünden zugeführten Hilfsspannung die Zündung der Hochdruck-Gasentladungslampe im Wesentlichen unverzögert erkennt.

Die Steuerschaltung ist mit einem Mikrocontroller versehen und die beim Zünden zugeführte Hilfsspannung ist derart an den Mikrocontroller angeschlossen, dass dieser die Zündung der Hochdruck-Gasentladungslampe im Wesentlichen unverzögert erkennt.

Der Mikrocontroller weist einen externen Interrupt-Eingang auf, auf den die beim Zünden zugeführte Hilfsspannung zum Erkennen der Zündung geführt ist.

Durch die in den weiteren Ansprüchen niedergelegten Maßnahmen sind vorteilhafte Weiterbildungen und Verbesserungen der in dem Anspruch 1 angegebenen Anordnung möglich.

Bei der vorliegenden Erfindung wird die Tatsache ausgenutzt, dass die Hilfsspannung beim Zündvorgang zusammenbricht und der externe Interrupt-Eingang dieses Zusammenbrechen mittels der dabei abfallenden Flanke oder des niedrigeren Pegels der eingebrochenen Hilfsspannung detektiert.

In besonders vorteilhafter und zweckmäßiger Ausgestaltung der Erfindung ist ein Spannungsteiler vor dem Eingang der Steuerschaltung, insbesondere dem externen Interrupt-Eingang des Mikrokontrollers vorgesehen, über welchen die Hilfsspannung zugeführt wird. Damit erhält der Interrupt-Eingang verträgliches, logisches Potential.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch den Verlauf einer beim Zünden vorgesehenen Hilfsspannung;
- Fig. 2: schematisch eine erste Ausführungsform der Erfindung mit externer Beschaltung des externen Interrupt-Eingangs eines Mikrokontrollers;
- Fig. 3: schematisch den Spannungsverlauf am Interrupt-Eingang gemäß der Anordnung von Fig. 2;

### Beschreibung der Ausführungsbeispiele

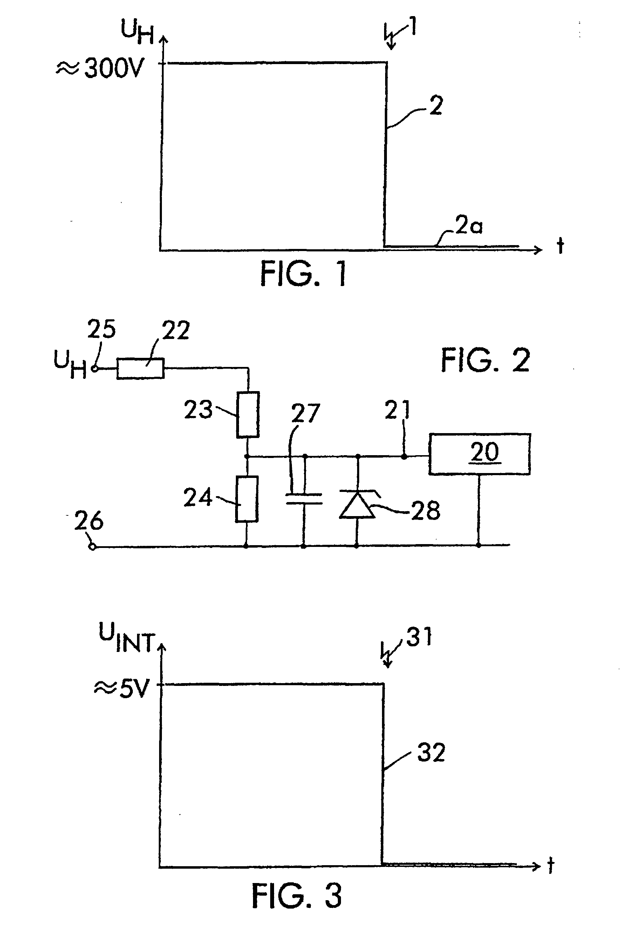

In Fig. 1 ist schematisch der Verlauf einer Hilfsspannung U_{H} über der Zeit t dargestellt. Diese Hilfsspannung U_{H} wird wegen des großen Zündspannungsbedarfs beim Zündvorgang einer Hochdruck-Gasentladungslampe deren Zündvorrichtung zugeführt. Die Hochdruck-Gasentladungslampe, die insbesondere zur Verwendung in einem Kraftfahrzeugscheinwerfer vorgesehen sein kann, samt ihrer Versorgungsschaltung für die Brennenergie, der Steuerschaltung und einer Zündschaltung sind hier nicht im einzelnen dargestellt. Der Bedarf an Zündspannung ist im Vergleich mit der notwendigen Brennspannung sehr hoch. Die notwendige Versogungsspannung für das Zündteil kann z.B. bei ca. 450 V liegen, während die Brennspannung im allgemeinen weniger als ca. 100 V beträgt. Daher wird zum Zünden und nur zu diesem Vorgang eine zusätzliche Spannung U_{H} als Hilfsspannung aufgebracht. Da diese Hilfsspannung nur zur Einleitung der Zündung benötigt wird, ist sie eine relativ hochohmige Spannungsquelle und bricht deshalb beim Zünden, in Fig. 1 durch den Pfeil 1 dargestellt, sehr schnell zusammen. Die Hilfsspannung U_{H} fällt also beim Zünden 1 vom Wert von ca. 300 V auf praktisch 0 V, oder allgemein auf einen niedrigen Pegel 2a, ab und bildet dabei eine sehr steile Flanke 2.

Gemäß dem Grundgedanken der Erfindung ist die nicht näher dargestellte Steuerschaltung derart gestaltet, daß sie über das Verhalten oder den Status der beim Zünden zugeführten Hilfsspannung U_{H} die Zündung der Hochdruck-Gasentladungslampe unverzögert erkennt.

Entsprechend dem in Fig. 2 dargestellten ersten Ausführungsbeispiel der Erfindung ist die nicht näher dargestellte Steuerschaltung mit einem Mikrokontroller 20 versehen. Die nur für die Einleitung der Zündung 1 erforderliche Hilfsspannung U_{H} wird erfindungsgemäß derart an den Mikrokontroller 20 in Fig. 2 angeschlossen, daß dieser die Zündung unverzögert erkennen kann. Der Mikrokontroller 20 weist einen Anschluß für externe Unterbrechung oder externes Ereignis auf, den sogenannten externen Interrupt-Eingang 21. Gemäß zweckmäßiger Ausgestaltung der Erfindung wird diesem externen Interrupt-Eingang 21 die beim Zünden zugeführte Hilfsspannung zum Erkennen der Zündung zugeführt. Die Hilfsspannung U_{H} bricht beim Zündvorgang zusammen. In vorteilhafter Weise detektiert der externe Interrupt-Eingang 21 dieses Zusammenbrechen mittels der dabei abfallenden Flanke 2 in Fig. 1, wodurch das Zünden unverzüglich erkannt wird, weil sich die Hilfsspannung prinzipiell wie eine externe Unterbrechung verhält und so vom Mikrokontroller 20 interpretiert wird. Da der externe Interrupt-Eingang eines Mikrokontrollers generell sowohl auf eine Flanke als auch auf das Eintreten eines bestimmten statischen Zustandes, beispielsweise den Niedrigspannungspegel 2a in Fig. 1 von ca. 0 Volt, eingestellt werden kann, könnte der Mikrokontroller mit beide Methoden arbeiten.

In Fig. 2 ist schematisch eine externe Beschaltung des externen Interrupt-Eingangs 21 des Mikrokontrollers 20 dargestellt. Da der Interrupt-Eingang 21 des Mikrokontrollers 20 eigentlich ein digitaler Eingang ist, und somit nur logische "1" und "0" sowie Flanken erkennen kann, ist in zweckmäßiger Ausgestaltung der Erfindung die Hilfsspannung U_{H} über einen Spannungsteiler auf den Interrupt-Eingang 21 geführt. Der Spannungsteiler besteht in dem dargestellten Ausführungsbeispiel aus den Widerständen 22, 23 und 24, die in Reihenschaltung zwischen den Anschlüssen 25 und 26 liegen. Am Anschluß 25 liegt die Hilfsspannung U_{H}, vorzugsweise als positive Spannung, an und am Anschluß 26 liegt Nullpotential an. Der Interrupt-Eingang 21 ist an die Verbindung der beiden Widerstände 23 und 24 angeschlossen. Dort steht ein für ihn verträgliches logisches Potential, beispielsweise 5 V oder O V an. Parallel zum Widerstand 24 ist ein Kondensator 27 und eine Zenerdiode 28 angeordnet. Sie dienen zum einen zum Glätten der auf den Interrupt-Eingang 21 geführten Spannung und zum anderen zum Schutz gegen Überspanungen.

In Fig. 3 ist schematisch der Spannungsverlauf am Interrupt-Eingang 21, Uᵢₙₜ über der Zeit t, dargestellt. Bis zum mit dem Pfeil 31 bezeichneten Zeitpunkt der zu erkennenden Zündung verläuft die Spannung hoch mit einem Wert von etwa 5 V. Bei der Zündung 31 bricht die Spannung Uᵢₙₜ unter Bildung einer steilen Flanke 32 praktisch auf den Wert 0 V zusammen. Dieser Zusammenbruch bzw. die damit verbundene steile abfallende Flanke 32 kann der Mikrokontroller 20 unverzögert als die Zündung interpretieren und erkennen.

## Patentansprüche

1. Anordnung zum Erkennen der Zündung einer Hochdruck-Gasentladungslampe, insbesondere zur Verwendung in einem Kraftfahrzeugscheinwerfer, wobei eine Schaltung zur Versorgung der Hochdruck-Gasentladungslampe mit Brennenergie, eine Steuerschaltung sowie eine Zündschaltung vorgesehen sind, und die Zündschaltung zum Zünden mit einer Hilfsspannung beaufschlagt wird, **dadurch gekennzeichnet, dass** die Steuerschaltung mit einem Mikrocontroller (20) versehen ist, der einen externen Interrupt-Eingang (21) aufweist, und dass eine beim Zünden (1, 31) zugeführte Hilfsspannung (U_{H}) auf den externen Interrupt-Eingang (21) zum Erkennen der Zündung (1, 31) der Hochdruck-Gasentladungslampe geführt ist.

2. Anordnung nach Anspruch 1, **dadurch gekennzeichnet, dass** die Hilfsspannung (U_{H}) beim Zündvorgang (1, 31) zusammenbricht und der externe Interrupt-Eingang (21) dieses Zusammenbrechen mittels der dabei abfallenden Flanke (2, 32) oder des niedrigen Pegels (2a) der eingebrochenen Hilfsspannung (U_{H}) detektiert.

3. Anordnung nach Anspruch 1 oder 2, **dadurch gekennzeichnet, dass** ein Spannungsteiler (22, 23, 24; 42, 44; 62, 64) vor dem Eingang der Steuerschaltung, insbesondere vor dem externen Interrupt-Eingang (21) des Mikrocontrollers (20) vorgesehen ist, über welchen die Hilfsspannung (U_{H}) zugeführt wird.

## Claims

1. Arrangement for identifying the ignition of a high pressure gas discharge lamp, in particular for use in a motor vehicle headlight, wherein a circuit for supplying the high pressure gas discharge lamp with combustion energy, a control circuit and an ignition circuit are provided and the ignition circuit is charged with an auxiliary voltage for igniting, **characterised in that** the control circuit is provided with a microcontroller (20), which has an external interrupt input (21), and an auxiliary voltage (U_{H}) supplied on ignition (1, 31) is conducted on to the external interrupt input (21) to identify the ignition (1, 31) of the high pressure gas discharge lamp.

2. Arrangement according to claim 1, **characterised in that** the auxiliary voltage (U_{H}) collapses during the ignition process (1, 31) and the external interrupt input (21) detects this collapse by means of the therein falling flank (2, 32) or the low level (2a) of the broken-down auxiliary voltage (U_{H}).

3. Arrangement according to claim 1 or 2, **characterised in that** a voltage divider (22, 23, 24; 42, 44; 62, 64) is provided in front of the input of the control circuit, in particular in front of the external interrupt input (21) of the microcontroller (20), via which the auxiliary voltage (U_{H}) is supplied.

## Revendications

1. Montage pour la détection de l'allumage d'une lampe à décharge à haute pression, en particulier pour une utilisation dans un projecteur de véhicule automobile, un circuit d'alimentation de la lampe à décharge à haute pression en énergie combustible, un circuit de commande ainsi qu'un circuit d'allumage étant prévus et une tension auxiliaire étant appliquée au circuit d'allumage pour assurer l'allumage, **caractérisé en ce que** le circuit de commande est muni d'un microcontrôleur (20) qui comprend une entrée d'interruption externe (21) et **en ce qu'**une tension auxiliaire (U_{H}) appliquée lors de l'allumage (1, 31) est amenée sur l'entrée d'interruption externe (21) pour détecter l'allumage (1, 31) de la lampe à décharge à haute pression.

2. Ensemble selon la revendication 1, **caractérisé en ce que** la tension auxiliaire (U_{H}) s'effondre lors de l'opération d'allumage (1, 31) et que l'entrée d'interruption externe (21) détecte cet effondrement à l'aide du flanc (2, 32) qui chute à ce moment-là ou du faible niveau (2a) de la tension auxiliaire effondrée (U_{H}).

3. Ensemble selon la revendication 1 ou 2, **caractérisé en ce qu'**un diviseur de tension (22, 23, 24 ; 42, 44 ; 62, 64) servant à amener la tension auxiliaire (U_{H}) est prévu devant l'entrée du circuit de commande, en particulier devant l'entrée d'interruption externe (21) du microcontrôleur (20).
